# FASCICULE DE BREVET EUROPEEN

(11) **EP 0 398 080 B1**
(45) Date de publication et mention de la délivrance du brevet: **25.01.1995**
(21) Numéro de dépôt: 90108369.1
(22) Date de dépôt: 03.05.1990
(51) Int. Cl.: A61G 5/04, A61G 5/06

(54) **Chaise roulante motorisée**
Motorisierter Rollstuhl
Motor driven wheelchair

(30) Priorité: 17.05.1989 CH 1836/89
(43) Date de publication de la demande: 22.11.1990
(73) Titulaire: ALUWELD S.A., CH-1227 Geneve (CH)
(72) Inventeur: Reimann, Jean, CH-1241 Puplinge (CH)
(74) Mandataire: Micheli & Cie

(56) Documents cités:
- EP-A- 0 193 473
- DE-A- 3 128 112
- DE-A- 3 209 315
- US-A- 4 828 325

## Description

La présente invention se rapporte aux chaises roulantes motorisées et plus particulièrement à celles permettant non seulement de se déplacer sur une surface plane, mais également de gravir ou descendre des escaliers, trottoirs et autres obstacles similaires.

Actuellement, les chaises roulantes motorisées comprennent toutes un châssis tubulaire soudé, généralement en acier, sur lequel sont montés un moteur électrique à aimant permantant, d'une tension d'alimentation de 12 V généralement et son variateur de vitesse, le moteur étant branché sur une batterie conventionnelle.

La transmission du moteur aux roues ou aux flasques portant les roues est réalisée par un réducteur à chaîne et pignon en prise directe sur le moteur. Le châssis tubulaire soudé sert également de support et d'armature au fauteuil proprement dit dans lequel l'usager s'assied.

Ces chaises ou fauteuils roulants motorisés sont lourds, encombrants et onéreux de par leur construction soudée.

On connaît du document DE-A-3 128 112 une chaise roulante motorisée, comportant un ensemble moteur-transmission dont l'arbre de sortie s'étend de part et d'autre de la boîte de transmission et porte à chacune de ses extrémités un train de roulement; l'ensemble moteur-transmission portant un support sur lequel sont fixées des batteries d'alimentation; et qui est muni à son extrémité avant inférieure d'au moins une roulette.

Le but de la présente invention est de mettre à disposition des usagers une chaise ou fauteuil roulant maniable, moins encombrant, plus léger, facilement transportable et à des conditions plus avantageuses.

La chaise roulante motorisée selon l'invention se distingue par les caractéristiques énumérées à la revendication 1.

Le dessin annexé illuste schématiquement et à titre d'exemple une forme d'exécution particulière de la chaise roulante motorisée selon l'invention.

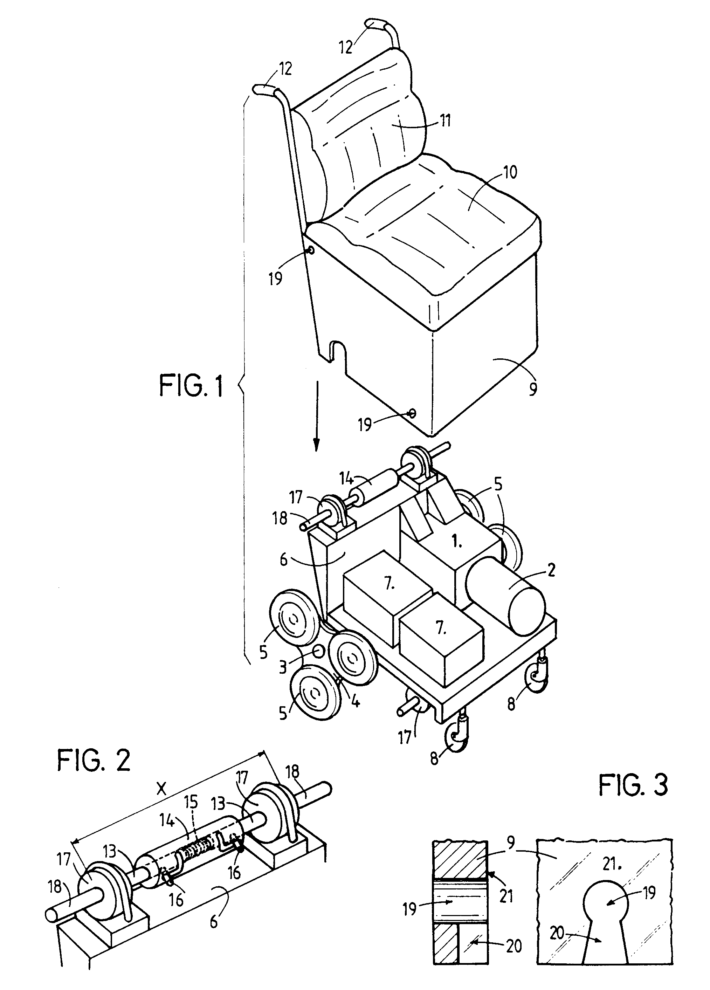

La figure 1 est une vue en perspective éclatée de la chaise roulante.

Les figures 2 et 3 illustrent des détails de la fixation de la carrosserie de la chaise sur l'ensemble moteur-transmission.

L'originalité essentielle de la chaise roulante motorisée illustrée réside dans l'abscence de châssis, notamment de châssis tubulaire soudé. En effet cette chaise roulante se compose d'un ensemble moteur-transmission directement relié aux roues ou flasques porte-roues, cet ensemble étant fixé rigidement sur un support portant les roulettes ou galets de roulement avant et étant muni de moyen de fixation rapide et amovible de la carrosserie de la chaise comportant sons siège ainsi que des poignées pour le déplacement manuel de la chaise.

L'ensemble moteur-transmission comporte une boîte de transmission 1 comprenant un réducteur à vis sans fin et planétaire en prise directe avec un servo-moteur 24 Volts 2 commandé par un amplificateur de puissance. L'arbre de sortie 3 de la boîte de transmission 1 est rigide et reçoit à chacune de ses extrémités un flasque 4 portant deux ou trois roues 5 pivotées folles sur des axes solidaires de ces flasques.

Ainsi l'ensemble de traction; moteur, transmission et organe de roulement forme un tout compact, rigide et relativement léger et constitue à lui seul le châssis de la chaise.

Cet ensemble de traction est muni d'un support 6 présentant une surface recevant des batteries au gel 7. Les galets ou roulettes avant 8 de la chaise sont pivotés fous sur des axes eux-mêmes pivotés fou dans le support 6.

Enfin ce support 6 comporte des moyens de fixation rapide et amovible d'une carrosserie légère 9 sur laquelle sont fixés le siège 10 et le dossier 11 d'un fauteuil et comportant des poignées 12. Cette carrosserie 9 est réalisée en métal léger et comporte des parties en nid d'abeille sur lesquelles le siège et le dossier du fauteuil en mousse polyuréthane sont directement injectés.

Cette carrosserie 9 peut être réalisée en deux parties, siège et dossier, emboîtables pour en diminuer l'encombrement et en faciliter le transport.

Le bas ou la jupe de cette carrosserie 9 comporte des moyens de fixation coopérant avec les moyens de fixation rapide du support 6 permettant ainsi un accouplement ou une séparation de la carroserie 9 de l'ensemble moteur-transmission d'une façon aisée et rapide.

Les moyens de fixation portés par le support sont constitués, chacun par deux axes coaxiaux 13 montés coulissant dans un tube 14 et tendant à être éloignés l'un de l'autre par un ressort 15. Chaque axe est muni d'un organe de manoeuvre 16 émergeant hors du tube 14 par une fente en forme de L.

Chaque axe 13 coulisse dans un silentbloc 17 fixé sur le support à l'aide d'une bride. Les extrémités 18 des axes 13 sont destinées à coopérer avec les moyens de fixation de la carrosserie 9 pour la fixation temporaire de celle-ci sur l'ensemble moteur-transmission.

Ces moyens de fixation de la carrosserie sont constitués par des perçages 19 débouchant dans un chambrage 20. La distance séparant les faces internes 21 des moyens de fixation de la carrosserie 9 correspond à la distance X séparant les faces externes des silentblocs 17. Ainsi lorsque les axes 13 sont maintenus soit manuellement soit que les organes de manoeuvre 16 soient introduits dans la partie des fentes en L perpendiculaire à l'axe du tube 13, en position rétractée les extrémités 18 de ces axes 13 sont introduits dans les chambrages 20. Lorsqu'on libère les axes 13, leurs extrémités s'introduisent automatiquement dans les perçages 19 et fixent la carrosserie sur l'ensemble moteur-transmission.

Un second ensemble de moyens de fixation rapide 13-18 est prévu à l'extrémité avant du support 6 et coopère avec un des moyens de fixation correspondant 19,21 prévus à la partie frontale de la carrosserie 9.

L'abscence de châssis tubulaire et la fixation amovible de la carrossserie sur l'ensemble moteur-transmission permet de réaliser une chaise roulante motorisée peu encombrante, légère et facilement transportable.

Les flasques 4 munis de roues 5 permettent le franchissement d'obstacles tels que trottoirs ou marches. On peut même monter des escaliers avec une telle chaise qui trouve ainsi une application particulière pour le transport de personnes dans les aéroports et leurs montées à bord des avions par les passerelles habituelles.

Lorsque le moteur est arrêter on peut déplacer la chaise en la poussant par ses poignées 12.

Il est évident que dans des variantes les flasques 4 et roues 5 peuvent être remplacées par des roues normales auquel cas la traction motorisée s'effectue sur terrain relativement plat.

D'une façon générale les roues ou flasques porte-roues sont montés directement sur les extrémités de l'arbre 3 de la transmission ou boîte à vitesse 1 sortant de part et d'autre de celle-ci et s'étendant sous la partie du support 6 recevant les batteries 7. La rigidité de cet arbre 3 et sa faible longueur font qu'il n'est pas nécessaire de prévoir de palier sur le support 6 d'une construction simple et peu couteuse.

D'autre système de fixation rapide de la carrosserie 9 muni du siège 10,11 peuvent être envisagés par exemple des fixations par encliquetage ou à fermeture rapide par excentrique. Toutefois ces moyens de fixation sont de préférence conçus de manière à pouvoir être actionnés sans outils.

L'ensemble transmission-moteur constitue donc simultanément l'ensemble propulseur et remplace totalement un châssis, il assure donc à lui seul, avec le support léger 6 qui lui est fixé, par des vis et boulons par exemple, la rigidité et la stabilité de toute la chaise roulante motorisée.

Le servo-moteur au cobalt 24 Volts est commandé par un servo-amplificateur très puissant donnant des impulsions de commande au moteur à différents régimes tout en assurant un couple pratiquement constant ce qui permet de stabiliser ou régler la vitesse de rotation des flasques 4 quelle que soit la charge appliquée notamment lors de la montée ou la descente de marches ou d'escaliers.

Enfin la conception du siège en mousse de polyuréthane directement injecté sur une partie de la carosserie en nid d'abeille, le siège et le dossier peuvent être séparables par simple emboîtement, permettant la réalisation d'une carroserie légère, rigide, peu encombrante puisqu'elle se démonte facilement en deux parties et donc facilement transportable, qui présente toutefois un fauteuil confortable. De plus le dossier et le siège étant monolytique avec la partie de la carrosserie correspondante ils ne nécessitent aucune fixation mécanique ce qui simplifie encore l'ensemble de la chaise roulante.

Ainsi de par sa conception cette chaise roulante motorisée est légère, rigide, facilement démontable pour son transport et ne fait intervenir à sa fabrication qu'un minimum d'opérations de montage. Il en résulte une chaise roulante extrémement performante, facile d'utilisation et d'un coût bien inférieure à toutes les chaises roulantes existantes.

Il est évident que l'arbre 3 de la boîte de transmission peut être un arbre creux de manière à pouvoir équiper cette chaise d'un système de motorisation plus complet permettant à volonté l'entraînement en rotation soit du flasque 4 soit des roues 5 pivotées sur ce flasque 4. Un axe de commande, actionné par un organe manuel coulisse axialement dans chaque extrémité de l'arbre creux 3 et commande les déplacements axiaux d'un pignon denté engrènant soit avec une couronne dentée portée par le flasque 4 soit avec des roues dentées solidaires des roues 5.

Ainsi lorsque le flasque 4 est entraîné en rotation la chaise roulante est adaptée à gravir ou descendre des marches ou escalier tandis que lorsque les roues 5 individuelles sont entraînées la chaise peut se déplacer sur une surface plane, reposant sur deux roues 5 de chaque flasque 4.

Enfin en prévoyant un axe de commande du pignon qui soit creux on peut incorporer dans celui-ci une tige de commande, actionnée par une fourchette, actionnant un frein agissant sur les roues 5 pivotées sur le flasque.

Ainsi équipée cette chaise roulante motorisée répond à toute les exigences de sécurité et de performance.

## Revendications

1. Chaise roulante motorisée comportant un ensemble moteur-transmission (1,2) dont un arbre de sortie (3) s'étend de part et d'autre de la boîte de transmission (1) et porte à chacune de ses extrémités un train de roulement (4,5), cet ensemble moteur-transmission (1,2) portant un support (6) sur lequel sont fixées des batteries d'alimentation (7) et qui est muni à son extrémité avant inférieure d'au moins une roulette (8); caractérisée par le fait qu'elle comporte une carrosserie légère (9) sur laquelle le siège (10) et le dossier (11) du fauteuil en matière synthétique sont directement injectés; et par le fait qu'elle comporte des moyens de fixation rapides (14-20) pour accoupler et désaccoupler la carrosserie (9) au support de l'ensemble moteur-transmission.

2. Chaise selon la revendication 1, caractérisée par le fait que la carrosserie (9) est réalisée en deux parties emboîtable l'une comportant le siège (10) l'autre le dossier (11) du fauteuil, cette seconde partie comportant des poignées (12) permettant la manoeuvre manuel le de la chaise.

3. Chaise selon la revendication 1 ou la revendication 2, caractérisée par le fait que le dossiers (11) et le siège (10) du fauteil sont en mousse de polyuréthane injectée sur des partie en nids d'abeille de la carrosserie (9).

4. Chaise selon l'une des revendications précédentes, caractérisée par le fait que chaque train de roulement (4,5) comporte un flasque (4) solidaire de l'arbre de transmission (3) muni d'au moins deux roues 5.

5. Chaise selon l'une des revendications 1 à 3, caractérisée par le fait que chaque train de roulement comporte un moyeu et est formé par une roue solidaire de l'arbre de transmission.

6. Chaise selon l'une des revendications 1 à 3, caractérisée par le fait que l'arbre de transmission (3) est creux et qu'il comporte, monté coulissant dans chacune de ses extrémités, un arbre de commande solidaire d'un pignon destiné à engréner soit avec une couronne dentée intérieurement portée par un flasque pivoté sur l'arbre de transmission soit avec des roues dentées solidaires des roues pivotées sur le flasque.

7. Chaise selon la revendication 6, caractérisée par le fait qu'elle comporte un organe manuel de commande actionnant les arbres de commande dans des déplacements axiaux.

8. Chaise selon la revendication 6, caractérisée par le fait que chaque arbre de commande est creux; une tige de commande étant montée coulissante dans chacun de ceux-ci, cette tige actionnant un frein agissant sur les roues pivotées sur le flasque.

9. Chaise selon la revendication 8, caractérisée par le fait qu'elle comporte un organe de commande manuel actionnant les tiges de commandes dans leurs déplacements axiaux.

10. Chaise selon l'une des revendications précédentes, caractérisée par le fait que les moyens de fixation rapide (14-20) de la carrosserie (9) sur l'ensemble moteur-transmission (1,2) comprennent au moins un organe telescopique (14,18) fixé au support (6) par l'intermédiaire de silentblocs (17) les extrémités (18) de cet organe télescopique étant destinées à coopérer avec des perçages (19) pratiqués dans la carrosserie (9).

## Claims

1. Motorized rolling-chair comprising a motor-transmission assembly (1,2), an output shaft (3) of which extends on either side of the transmission gear (1) and carries at each of its ends a rolling train (4,5), this motor-transmission assembly (1,2) carrying a support (6) on which are fastened batteries (7) and which is provided at its lower front end with at least a roller (8); characterized by the fact that it comprises a light casing (9) on which the seat (10) and the back (11) of the armchair in synthetic material are directly injected; and by the fact that it comprises rapid fixing means (14-20) to couple and uncouple the casing (9) to the support of the motor-transmission assembly.

2. Chair according to claim 1, characterized by the fact that the casing (9) is made in two parts which are fixed together, the one comprising the seat (10) and the other the back (11) of the armchair, the second part comprising handgrips (12) permitting a manual operation of the chair.

3. Chair according to claim 1 or claim 2, characterized by the fact that the back (11) and the seat (10) of the armchair are in polyurethane foam injected on parts of the casing (9) having a honeycomb shape.

4. Chair according to one of the preceeding claims, characterized by the fact that each rolling train (4,5) comprises a flange (4) fastened with the transmission shaft (3) provided with at least two wheels (5).

5. Chair according to one of the claims 1 to 3, characterized by the fact that each rolling train comprises a hub and is formed by a wheel which is fastened with the transmission shaft.

6. Chair according to one of the claims 1 to 3, characterized by the fact that the transmission shaft (3) is hollow and that it comprises, slidingly mounted in each of its ends, a control shaft fastened with a pinion intended to gear either with an insidely toothed crown carried by a flange pivoted on the transmission shaft or with toothed wheels fastened with the wheels pivoted on the flange.

7. Chair according to claim 6, characterized by the fact that it comprises a manual control member actuating the control shaft in axial displacements.

8. Chair according to claim 6, characterized by the fact that each control shaft is hollow; a control rod being mounted slidingly in each of them, this control rod actuating a brake acting on the wheels pivoted on the flange.

9. Chair according to claim 8, characterized by the fact that it comprises a manual control member actuating the control rods in their axial displacements.

10. Chair according to one of the preceeding claims, characterized by the fact that the rapid fixing means (14-20) of the casing (9) onto the motor-transmission assembly (1,2) comprise at least one telescopic member (14,18) fastened to the support (6) through the intermediary of silentblocs (17), the ends (18) of this telescopic member being intended to cooperate with holes (19) provided in the casing (9).

## Patentansprüche

1. Motorisierter Rollstuhl mit einer Motor-Getriebe Gruppe (1,2), bei der eine Ausgangswelle (3) sich beidseitig des Getriebekastens (1) erstreckt und an seinen beiden Enden ein Fahrgestell (4,5) trägt, wobei diese Motor-Getriebe Gruppe (1,2) eine Auflage (6) trägt, auf welcher Speisungsbatterien (7) befestigt sind und die auf ihrem unteren Vorderende zumindest mit einer Rolle (8) versehen ist, gekennzeichnet durch die Tatsache, dass er eine Leichtkarosserie (9) aufweist, auf welcher der Sitz (10) und die Rücklehne (11) des Stuhls aus synthetischem Werkstoff direkt eingespritzt sind; und durch die Tatsache, dass er Schnellbefestigungsmittel (14,20) zum Ankoppeln und Abkoppeln der Karosserie (9) an die Auflage der Motor-Getriebe Gruppe aufweist.

2. Rollstuhl gemäss Anspruch 1, gekennzeichnet durch die Tatsache, dass die Karosserie (9) aus zwei ineinanderfügbaren Teilen besteht, wobei der eine Teil den Sitz (10) und der andere die Rücklehne (11) umfasst, und wobei dieser zweite Teil Handgriffe (12) aufweist, um den Stuhl von Hand zu bewegen.

3. Rollstuhl gemäss Anspruch 1 oder Anspruch 2, gekennzeichnet durch die Tatsache, dass die Rücklehne (11) und der Sitz (10) des Stuhls aus Polyurethanschaum bestehen, der auf Wabenmusterteile der Karosserie (9) gespritzt ist.

4. Rollstuhl gemäss einem der bevorstehenden Ansprüche, gekennzeichnet durch die Tatsache, dass jedes Fahrgestell (4,5) einen Flansch (4) aufweist, der festverbunden mit der Antriebswelle (3) mit zumindest zwei Rädern (5) versehen ist.

5. Rollstuhl gemäss einem der Ansprüche 1 bis 3, gekennzeichnet durch die Tatsache, dass jedes Fahrgestell eine Nabe aufweist und durch ein mit der Antriebswelle festverbundenes Rad gebildet wird.

6. Rollstuhl gemäss einem der Ansprüche 1 bis 3, gekennzeichnet durch die Tatsache, dass die Antriebswelle (3) hohl ist und dass sie, gleitend in jedes ihrer Endstücke eingebaut, eine Steuerwelle aufweist, die fest mit einem Zahnrad verbunden ist, das dazu bestimmt ist, entweder mit einem innenverzahnten Kranzring, der von einem auf der Antriebswelle drehbar gelagerten Flansch getragen wird, oder mit Zahnrädern, die mit den auf dem Flansch drehbar gelagerten Rädern festverbunden sind, in Eingriff gebracht zu werden.

7. Rollstuhl gemäss Anspruch 6, gekennzeichnet durch die Tatsache, dass er ein Handbedienungsorgen aufweist, das die Steuerwellen in ihren Axialverschiebungen betätigt.

8. Rollstuhl gemäss Anspruch 6, gekennzeichnet durch die Tatsache, dass jede Steuerwelle hohl ist, wobei eine Steuerstange in jede der letzteren gleitend eingebaut ist, und wobei diese Steuerstange eine Bremse betätigt, die auf die auf dem Flansch drehbar gelagerten Räder wirkt.

9. Rollstuhl gemäss Anspruch 8, gekennzeichnet durch die Tatsache, dass er ein Handbedienungsorgan aufweist, das die Steuerstangen in ihren Axialverschiebungen betätigt.

10. Rollstuhl gemäss einem der bevorstehenden Ansprüche, gekennzeichnet durch die Tatsache, dass die Schnellbefestigungsmittel (14,20) der Karosserie (9) auf die Motor-Getriebe Gruppe (1,2) zumindest ein teleskopisches Organ (14,18) aufweisen, das über Silentblöcke (17) auf der Auflage (6) gefestigt ist, wobei die Endstücke (18) dieses teleskopischen Organs dazu bestimmt sind, mit in der Karosserie (9) angebrachten Bohrungen (19) zusammenzuwirken.
